# EUROPEAN PATENT APPLICATION

(11) **EP 1 150 475 A2**
(43) Date of publication of application: **31.10.2001**
(21) Application number: 01109866.2
(22) Date of filing: 23.04.2001
(51) Int. Cl.: H04M 1/02, H04N 7/14

(54) **Holder and portable telephone with the holder**

(30) Priority: 27.04.2000 JP 2000127165
(71) Applicant: MITSUBISHI DENKI KABUSHIKI KAISHA, Tokyo 100-8310 (JP)
(72) Inventor: Miyake, Hiroyuki, Chiyoda-ku, Tokyo 100-8310 (JP)
(74) Representative: Popp, Eugen, Dr.

(57) **Abstract**

The holder is provided with the first component holding unit for holding an image pickup device (1) on a main surface of a board (4), and a second component holding unit for holding another component, such as a receiver (3), at a location different from the location of the first component holding unit. The first and second component holding units are formed as a single piece.

## Description

### BACKGROUND OF THE INVENTION

### Field of the Invention

The present invention relates to a holder for holding a variety of devices on a board within a communication apparatus such as a portable telephone, and a portable telephone provided with such a holder.

### Description of the Background Art

In accordance with advances in performance of portable telephones in recent years, portable telephones provided with image pickup devices have been developed. Fig. 10 shows a partial appearance of such a portable telephone. A casing 6 has a casing opening 10, located above a display device 5, which is provided for exposure of a lens of the image pickup device. Fig. 11 shows the corresponding portion with casing 6 removed therefrom. The image pickup device 1, a receiver 3 and a display device 5 are placed on a board 4, at their prescribed positions respectively. Of these components, image pickup device 1 and receiver 3 are secured thereon, held by corresponding holders 20. Fig. 12 shows the state before image pickup device 1 and receiver 3 are mounted on holders 20.

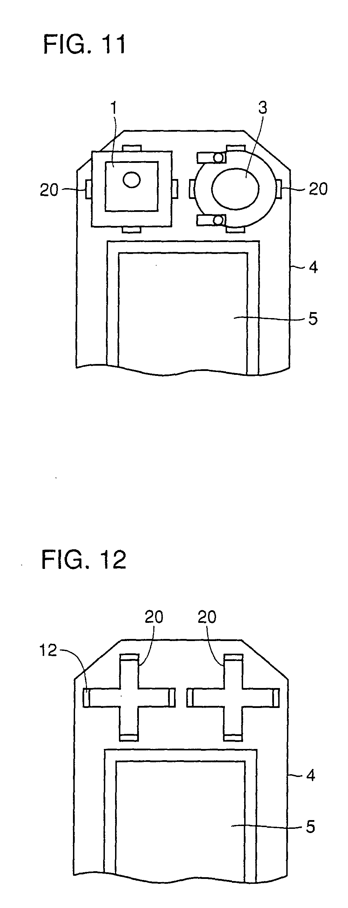

Holder 20, made of resin, is attached to board 4 by soldering, for example. Holder 20 has catches 12 arranged to hold a component from, e.g., four sides thereof, as shown in Fig. 12. The component such as image pickup device 1 or receiver 3 that is to be mounted on the position is mated or engaged in the space surrounded by the catches 12, so that it is held by holder 20. The component is detachable with respect to holder 20. Thus, unlike the case where the component is secured on board 4 by directly bonding thereto, it is readily possible to replace the component if it is defective, for example.

However, when the holder 20 should be prepared for each of the components of the portable telephone, including image pickup device 1 and receiver 3, and they should be attached to board 4 respectively, the parts count increases, the assembling work becomes complicated, and the production cost may also increase. Especially, taking into consideration the advances in performance of the portable telephones of these days resulting in increases in types and numbers of components to be attached to board 4, this poses a serious problem.

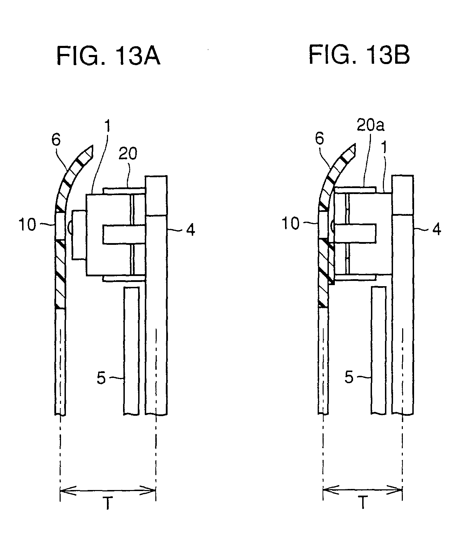

There also exist stringent demands for portable telephones reduced in thickness as a whole. To meet the demands, the distance T between the center of board 4 and the center of casing 6, as shown in Figs. 13A and 13B, should also be decreased to a minimum possible level.

The conventionally used holder 20, however, is of the type that holds or wraps the component with a plurality of catches 12, and therefore, the holder 20 should be interposed between the bottom surface of the component and board 4, as shown in Fig. 13A. In the case where the component itself is low in height, such interposition of holder 20 between the component and the board 4 would not cause a big problem. However, in the case of image pickup device 1, its height tends to be greater than in other components and cannot be made smaller beyond a certain level, due to an optical need to guarantee a focal distance between a lens and a photo detector within the device 1.

If the holder is being attached, not to board 4, but to the casing 6, as shown in Fig. 13B, it may be possible to place the holder 20a utilizing the steps on the upper portion of image pickup device 1, which enables reduction of the distance T. However, this method has a disadvantage that it is difficult to ensure electrical connection between image pickup device 1 attached to the casing 6 and other components attached to board 4 at the time of assembly.

### SUMMARY OF THE INVENTION

Based on the above, an object of the present invention is to provide a holder that allows easy assembly of a portable telephone. Another object of the present invention is to provide a holder that allows easy assembly of a portable telephone and also reduction in thickness thereof.

To achieve the objects above, a holder according to the present invention is provided with a first component holding unit for holding an image pickup device on a main surface of a board, and a second component holding unit for holding another component at a location different from that of the first component holding unit. The first and second component holding units are formed as a single piece. By employing such a configuration, the parts count is reduced and the assembling work is simplified.

Preferably, the first component holding unit is able to hold the image pickup device in a state being directly contacted to the main surface. By employing such a configuration, a distance between the board and the casing can be decreased, so that a portable telephone reduced in thickness is realized.

Preferably, the first component holding unit is in a frame shape for surrounding and holding the periphery of the image pickup device. By employing such a configuration, it becomes possible to hold the image pickup device without the holder being interposed between the image pickup device and the main surface.

Preferably, the first component holding unit is in a frame shape with its upper and bottom surfaces opened. By employing such a configuration, it is readily possible to achieve a structure that can hold the image pickup device in a state being directly contacted to the main surface.

Preferably, the second component holding unit is for holding a receiver. Such a configuration can be used for a portable telephone of the type that requires the image pickup device to be placed close to the receiver.

Preferably, the second component holding unit is for holding a display device. Such a configuration can be used for a portable telephone that is to be provided with a display device. During manufacturing of the holder, the first and second component holding units are aligned with each other to achieve a desired relative attitude therebetween with a high degree of accuracy. Thus, during assembly, it is possible to realize a desired relative attitude between the image pickup device and the display device with a desired level of accuracy, without any special operation.

Preferably, the holder is formed of resin by integral welding. Thus, manufacture of the holder is simplified.

A portable telephone according to the present invention is provided with either one of the holders above. By employing such a configuration, a portable telephone easy in assembly is realized. As the assembling work is simplified, the portable telephone can be manufactured at a low price.

The foregoing and other objects, features, aspects and advantages of the present invention will become more apparent from the following detailed description of the present invention when taken in conjunction with the accompanying drawings.

### BRIEF DESCRIPTION OF THE DRAWINGS

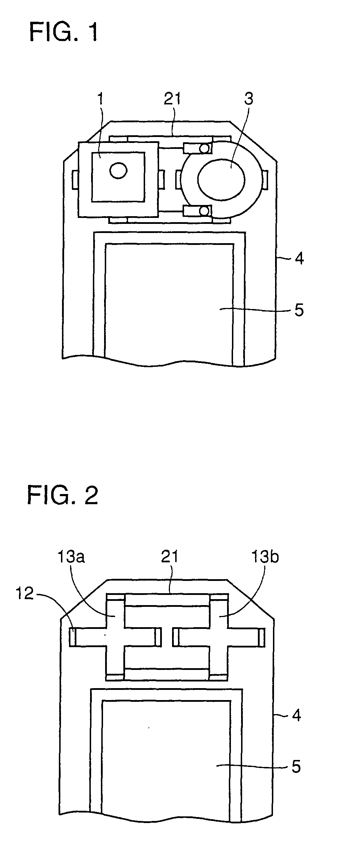

Fig. 1 is a top plan view showing an image pickup device and another component being held using a holder according to a first embodiment of the present invention.
Fig. 2 is a top plan view showing the holder according to the first embodiment being attached to a board.

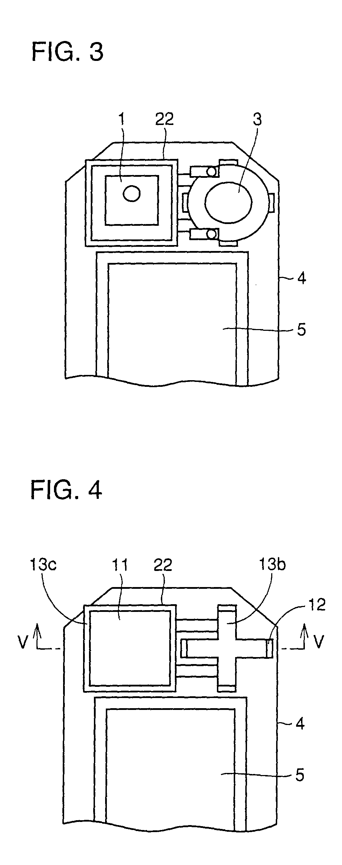

Fig. 3 is a top plan view showing an image pickup device and another component being held using a holder according to a second embodiment of the present invention.
Fig. 4 is a top plan view showing the holder according to the second embodiment being attached to a board.

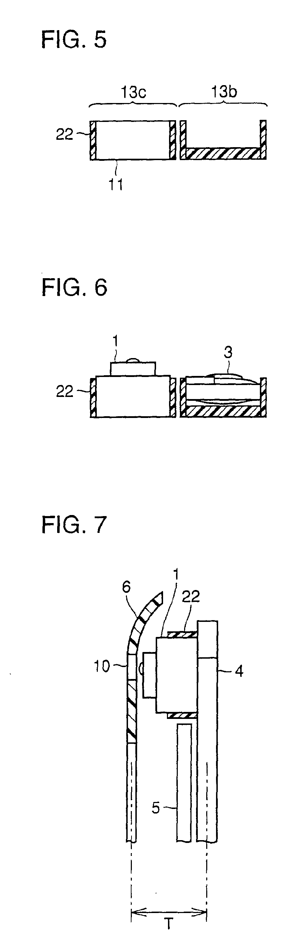

Fig. 5 is a cross sectional view of the holder according to the second embodiment, taken along the line V-V in Fig. 4.
Fig. 6 illustrates the image pickup device and the other component being held in the holder according to the second embodiment.
Fig. 7 is a cross sectional view of a portable telephone using the holder according to the second embodiment of the present invention.

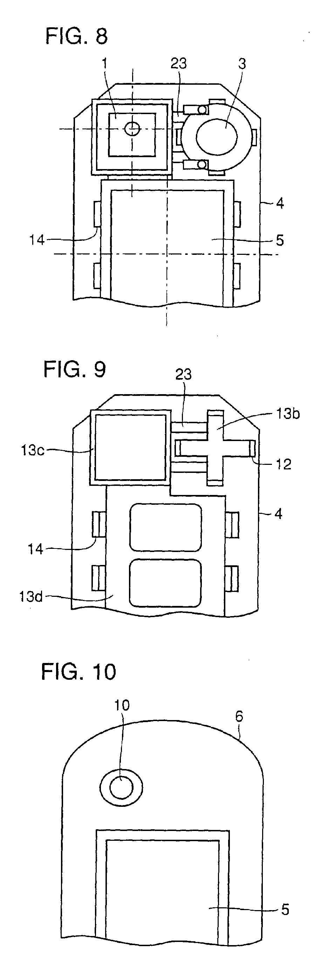

Fig. 8 is a top plan view showing an image pickup device and other components being held using a holder according to a third embodiment of the present invention.
Fig. 9 is a top plan view showing the holder according to the third embodiment being attached to a board.
Fig. 10 is a top plan view showing an outer appearance of a portable telephone provided with an image pickup device.
Fig. 11 is a top plan view showing an image pickup device and another component being held using conventional holders.
Fig. 12 is a top plan view of the conventional holders before the image pickup device and the other component are mounted thereon respectively.
Figs. 13A and 13B are cross sectional views of portable telephones provided with the conventional holders.

### DESCRIPTION OF THE PREFERRED EMBODIMENTS

### First Embodiment

A holder 21 of the first embodiment will be described with reference to Figs. 1 and 2. Fig. 1 shows the holder 21 on which an image pickup device 1 and a receiver 3 are mounted. Fig. 2 shows holder 21 before image pickup device 1 and receiver 3 are mounted thereon.

As shown in Figs. 1 and 2, holder 21 of the present embodiment is provided with a holding portion 13a as the first component holding unit for holding image pickup device 1, and a holding portion 13b as the second component holding unit for holding receiver 3 as another component in a location different from that of image pickup device 1. Holding portions 13a and 13b each have a plurality of catches 12. Holding portions 13a and 13b are connected with each other to form the single-piece holder 21. This holder 21 is formed with resin by integral molding.

Since holding portion 13a for holding image pickup device 1 and holding portion 13b for holding receiver 3 are formed as a single piece, unlike the conventional case where two separate holders 20 (see Fig. 12) were required to hold the two components, only one holder 21 will suffice. Thus, the parts count can be reduced and the assembling work is simplified.

Although the number of the holding portions as the component holding units being provided in a single-piece holder has been described as two in the present embodiment, it may be any number more than one.

### Second Embodiment

A holder 22 according to the second embodiment will be described with reference to Figs. 3 and 4. Fig. 3 shows the holder 22 on which an image pickup device 1 and a receiver 3 are being mounted. Fig. 4 shows holder 22 before image pickup device 1 and receiver 3 are mounted thereon. Fig. 5 is a cross sectional view of holder 22 taken along the line V-V in Fig. 4. A board 4 is not illustrated in Figs. 5 and 6.

In this holder 22, a holding portion 13c in a frame shape as shown in Fig. 4 is provided as the first component holding unit for holding image pickup device 1. More specifically, holding portion 13c has a frame shape with its upper and bottom surfaces opened, or, it is provided with only side surfaces, thereby forming a through hole 11 as a whole. When mounting image pickup device 1 on holder 22, image pickup device 1 is fitted into this through hole 11 formed inside the frame shape, and therefore, holder 22 holds image pickup device 1 by surrounding the periphery thereof, as shown in Fig. 3. Image pickup device 1 is held in a state where its bottom surface is directly contacted to board 4, as shown in Fig. 6.

The other component such as receiver 3 is held, as in the first embodiment, by holding portion 13b having a plurality of catches 12. The other requirements in the present embodiment are identical to those in the first embodiment.

Holding portion 13c for holding image pickup device 1 is in a frame shape with the upper and bottom surfaces opened. Thus, it is possible to prevent interposition of holder 22 between the bottom surface of image pickup device 1 and board 4, so that image pickup device 1 can be held with its bottom surface directly contacted to board 4. Accordingly, compared to the conventional case (see Fig. 13A), distance T can be decreased as shown in Fig. 7, and thus, a portable telephone reduced in thickness can be achieved.

Holding portion 13c of such a frame shape can be utilized because it is connected with holding portion 13b to form a single-piece holder. When respective holding portions had to be attached to board 4 independently from each other as in the conventional case, a sufficient area required for joining a holding portion having a shape like holding portion 13c to board 4 was hardly secured, and thus, the joining of such a member to board 4 was difficult. In holder 22, however, holding portion 13c is connected to another holding portion, which is holding portion 13b in this case, to form a single-piece holder. Therefore, by reliably joining the holding portion 13b to board 4, holding portion 13c can also be fixed to a desired position.

Holding portion 13c is not limited to the frame shape with its upper and bottom surfaces opened. It may have any frame shape, e.g., a frame shape including either upper or bottom surface, or even a shape other than the frame shape, as long as it can hold image pickup device 1 with its bottom surface directly contacted to board 4.

### Third Embodiment

Referring to Figs. 8 and 9, a holder 23 of the third embodiment will be described. Fig. 8 shows the holder 23 on which image pickup device 1, receiver 3 and display device 5 are being mounted. Fig. 9 shows holder 23 before image pickup device 1, receiver 3 and display device 5 are mounted thereon.

This holder 23 is provided with a holding portion 13d having a plurality of catches 14 as the second component holding unit. The other elements of the present embodiment are identical to those of the first embodiment. Although the holding portion 13b is not referred to as the second component holding unit in this embodiment, holding portion 13b of the present embodiment is structurally identical to that of the first embodiment. Holding portions 13b, 13c and 13d are connected with each other and formed as a single piece. The other requirements in the present embodiment are identical to those in the first embodiment.

A portable telephone may be used to take a picture by image pickup device 1 and display the same on display device 5. If image pickup device 1 and display device 5 are not parallel to each other, the picture may be displayed at a tilt, for example, giving a sense of discomfort to the user. Accordingly, parallelism and relative positioning of image pickup device 1 and display device 5 (hereinafter, collectively referred to as their "relative attitude relation") of high degrees of accuracy may be required.

In holder 23, holding portion 13c for holding image pickup device 1 and holding portion 13d for holding display device 5 are connected with each other to form a single-piece holder. Therefore, if this holder 23 is manufactured with a shape and accuracy that can realize the relative attitude relation between image pickup device 1 and display device 5 with a desired level of accuracy, the desired relative attitude relation between image pickup device 1 and display device 5 can always be achieved.

In the conventional case where the holder for holding display device 5 and the holder for holding image pickup device 1 were made as separate elements, the relative attitude relation of these holders when attached to board 4 determined the relative attitude relation of image pickup device 1 and display device 5. Thus, the respective holders had to be attached to board 4 with a high degree of accuracy, making the assembling work difficult. Using holder 23 of the present embodiment, however, the relative attitude relation between image pickup device 1 and display device 5 as desired is always guaranteed by simply attaching the entire holder 23 to board 4. This simplifies assembly of the portable telephone.

Although holder 23 has been described to include holding portion 13c as in the holder 22 of the second embodiment for holding image pickup device 1, it may have holding portion 13a as in the holder 21 of the first embodiment instead.

Holder 23 may enjoy a certain effect if it does not include holding portion 13b and only holding portions 13c and 13d are formed as a single piece. However, it is more desirable that it includes holding portions 13c, 13d and 13b formed into a single piece, from the standpoints of reduction of the parts count and simplification of the assembling work.

Although receiver 3 has been chosen as an example of the other component in the respective embodiments above, it may be any component other than receiver 3, e.g., an antenna.

### Fourth Embodiment

A portable telephone according to the present embodiment is provided with a holder according to either one of the first through third embodiments.

According to the present embodiment, a portable telephone easy in assembly is achieved. As the assembling work is simplified, the production cost thereof is also reduced. In addition, if the holder 22 of the second embodiment is employed, a portable telephone reduced in thickness can be realized.

As explained above, according to the present invention, the first component holding unit for holding the image pickup device and the second component holding unit for holding the other component are formed as a single-piece holder. Thus, the parts count can be decreased, and the assembling work is simplified.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A holder, comprising:
a first component holding unit for holding an image pickup device (1) on a main surface of a board (4); and
a second component holding unit for holding another component on said main surface at a location different from a location of said first component holding unit,
said first and second component holding units being formed as a single piece.

2. The holder according to claim 1, wherein said first component holding unit is designed to hold said image pickup device (1) in a state being directly contacted to said main surface.

3. The holder according to claim 2, wherein said first component holding unit is in a frame shape for surrounding and holding a periphery of said image pickup device (1).

4. The holder according to claim 3, wherein said first component holding unit is in a frame shape with upper and bottom surfaces opened.

5. The holder according to claim 1, wherein said second component holding unit is for holding a receiver (3).

6. The holder according to claim 1, wherein said second component holding unit is for holding a display device (5).

7. The holder according to claim 1, formed with resin by integral molding.

8. A portable telephone provided with the holder according to claim 1.
